# EUROPEAN PATENT SPECIFICATION

(11) **EP 4 374 293 B1**
(45) Date of publication and mention of the grant of the patent: **04.11.2026**
(21) Application number: 22754517.5
(22) Date of filing: 19.07.2022
(51) Int. Cl.: G06N 3/065, G06N 3/044, G06N 3/08

(54) **NANOWIRE-BASED DEVICE FOR IMPLEMENTING A RESERVOIR FOR A NEURAL NETWORK**
NANODRAHT-BASIERTE VORRICHTUNG ZUR IMPLEMENTIERUNG EINES RESERVOIRS FÜR EIN NEURONALES NETZWERK
DISPOSITIF À BASE DE NANOFILS POUR LA MISE EN OEUVRE D'UN RÉSERVOIR POUR UN RÉSEAU NEURONAL

(30) Priority: 21.07.2021 IT 202100019277
(43) Date of publication of application: 29.05.2024
(73) Proprietor: Politecnico di Torino, 10129 Torino (IT); Politecnico di Milano, 20133 Milano (IT); Istituto Nazionale di Ricerca Metrologica, 10135 Torino (TO) (IT)
(72) Inventor: RICCIARDI, Carlo, 10129 Torino (TO) (IT); MONTANO, Kevin, 10129 Torino (TO) (IT); MILANO, Gianluca, 10135 Torino (TO) (IT); IELMINI, Daniele, 20133 Milano (MI) (IT); PEDRETTI, Giacomo, 20133 Milano (MI) (IT)
(74) Representative: Metroconsult Srl
(86) International application number: PCT/IB2022/056632
(87) International publication number: WO 2023/002359

(56) References cited:
- US-A1- 2018 197 077
- RUOMIN ZHU ET AL: "Harnessing adaptive dynamics in neuro-memristive nanowire networks for transfer learning", ARXIV.ORG, CORNELL UNIVERSITY LIBRARY, 201 OLIN LIBRARY CORNELL UNIVERSITY ITHACA, NY 14853, 24 November 2020 (2020-11-24), XP081935139, DOI: 10.1109/ICRC2020.2020.00007

## Description

### Field of the invention

The present invention generally relates to the field of computing devices. In particular, the present invention relates to the field of artificial neural networks. More specifically, the present invention relates to a device for hardware implementation of a reservoir for a neural network.

### Background art

As is known, the computation paradigm known as "reservoir computing" is based on a separation between:
- the recurrent part of a neural network, i.e. the dynamic part called "reservoir"; and
- the non-recurrent part called "readout".

The "reservoir" permits mapping a space-time input in a new space, generating an output that can be sent to, and suitably analyzed by, the "readout". The "readout" is the only part of the "reservoir computing" system that needs to be trained.

Reservoir computing systems are commonly implemented by means of lithographic techniques, in particular using a "top-down" approach. Alternatively, reservoir computing systems are implemented by means of self-assembled nano-objects.

The Applicant observed that the reservoir computing systems known in the art suffer from a few drawbacks.

In particular, the known reservoir computing systems cannot, disadvantageously, be easily adapted to different computation tasks, and training of a large number of parameters is necessary.

Disadvantageously, the large number of parameters to be trained results in a long training time.

Disadvantageously, the known reservoir computing systems have high production costs and/or require specially equipped structures (e.g. white chambers) for their production.

Document US 2018/197077 A1 discloses a neuromorphic network.

Document Ruomin Zhu et al., "Harnessing adaptive dynamics in neuromemristive nanowire networks for transfer learning*",* discloses how to leverage adaptive dynamics which are inherent to neuromorphic nanowire networks in order to obtain transfer learning.

### Summary of the invention

The Applicant has tackled the problem of providing a device suitable for implementing a "reservoir".

In particular, the Applicant has tackled the problem of providing a device for neuromorphic computation which can process space-time inputs and which permits minimizing the number of parameters that need to be trained in an artificial neural network.

In particular, the present invention provides a a reservoir computing system in accordance with independent claim 1.

Preferred embodiments of the invention are set out in the dependent claims.

### Brief description of the drawings

The present invention will become more apparent in the light of the following detailed description, wherein reference will be made to the annexed drawings, provided merely by way of non-limiting example, wherein:
- Figure 1 shows a diagram of a reservoir computing system;
- Figure 2 shows a component of a reservoir according to the present invention;
- Figure 3 is an illustrative diagram of a reservoir according to the present invention;
- Figures 4a and 4b are schematic views showing some details of the reservoir of Figure 3;
- Figure 5 shows input signals sent to a reservoir according to one embodiment of the present invention;
- Figure 6a is a diagram of a reservoir computing system according to a first embodiment of the present invention;
- Figure 6b is a second diagram of a reservoir computing system according to a second embodiment of the present invention;
- Figure 7 shows a plurality of input signals sent to the reservoir of the system of Figure 6b and the output signal read by the readout of the system of Figure 6b.

In the drawings, those items which perform substantially the same function are designated by the same reference numerals.

The drawings are not in scale.

### Detailed description of some embodiments

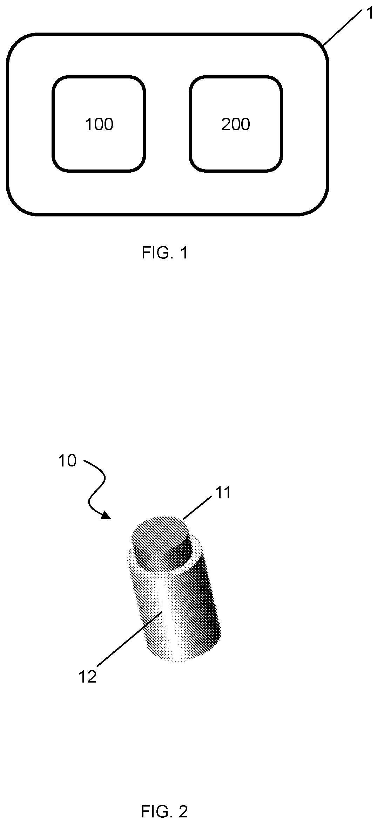

As shown in Figure 1, a system 1 suitable for implementing a neuromorphic computation paradigm, also known as "reservoir computing", comprises a dynamic part 100 (hereafter referred to as "reservoir") and a non-recurrent part 200 (hereafter referred to as "readout").

In the following, a device according to the present invention for implementing a reservoir for a neural network will be generically designated as reservoir 100.

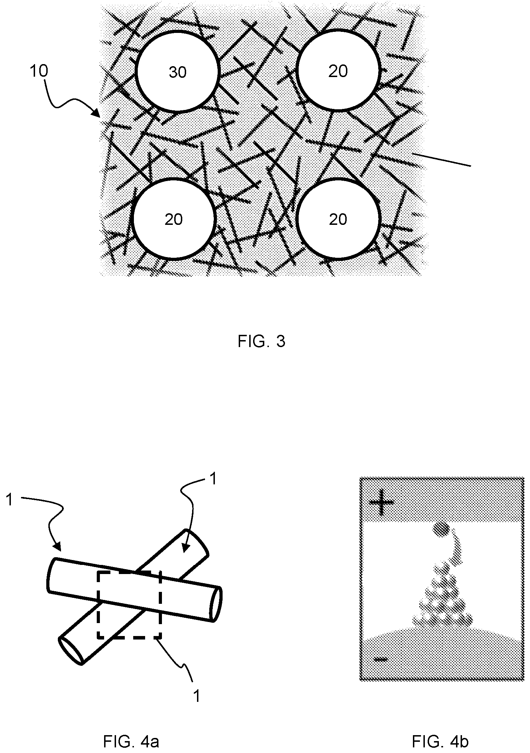

With reference to Figures 2 and 3, the reservoir 100 comprises a plurality of wires 10. Each wire 10 is a nanowire.

In particular, the term nanowire refers to a structure, preferably cylindrical in shape, whose cross-section has nanometric dimensions and whose length may vary from hundreds of nanometers to hundreds of micrometers.

As can be seen in Figure 2, each nanowire 10 comprises a metal core 11 and an insulating coating 12. Preferably, the metal core 11 is made of an electro-chemically active material. For example, the metal core 11 is made of silver or copper.

Preferably, the insulating coating 12 is made of a polymeric material (e.g. polyvinylpyrrolidone) or a metal oxide.

Note that the insulating coating 12 is a solid electrolyte.

Alternatively, the metal core 11 may be made of an electro-chemically inert material; in this case, the insulating coating 12 is a material in which the "resistive switching" phenomenon may occur by oxygen vacancy migration. Such a coating may, for example, be made of a metal oxide (in this case as well, the insulating coating is a solid electrolyte).

The reservoir 100 comprises a substrate 20.

Preferably, the substrate 20 is made of an insulating material. For example, the substrate 20 is a substrate made of silicon oxide.

As shown in Figure 3, a plurality of nanowires 10 are disposed on a surface of the substrate 20. In particular, the nanowires 10 are randomly spread over said surface.

It should be noted that spreading the nanowires 10 over the surface of the substrate 20 results in the creation of a random network of interconnected nanowires 10. The term random network of interconnected nanowires 10 refers to a network of nanowires having a certain active contact probability distribution. As will be further described below, new interconnections will be activated when an electric field is applied to the network of nanowires 10, resulting in increased conductivity of the network of nanowires 10.

Hereafter said random network of nanowires 10 will also be referred to as "network of nanowires 40".

With reference to Figures 4a and 4b, the following will describe how an interconnection between two nanowires 10 of the network of nanowires 40 is established. For clarity, the interconnection process will be described with reference to two nanowires; the Applicant observes, however, that such process may also occur among a plurality of nanowires 10 physically in contact with one another.

Considering, as concerns the case of an electro-chemically active core, a first nanowire 10a and a second nanowire 10b spread over the surface of the substrate 20 and in contact with each other, when a potential difference is applied across the first nanowire 10a and the second nanowire 10b, dissolution of atoms from the metal core 11 occurs. Such dissolution of atoms from the metal core 11 of the first nanowire 10a may form at least one metal ion. The metal ion may migrate, through the effect of the applied electric field, into the insulating coating 12 of the second nanowire 10b. A plurality of migrated metal ions on the metal core 11 of the second nanowire 10b may recrystallize, generating a conductive filament 15. The conductive filament 15 causes a variation in the conductivity of the junction between the two nanowires 10a, 10b (Figure 4b).

As concerns the case of an electro-chemically inert core and a coating made of metal oxide, the mechanism can be described as follows (still with reference to Figure 4b): by applying a potential difference across the first nanowire 10a and the second nanowire 10b, it is possible to induce oxygen ions belonging to the metal oxide to migrate into the insulating coating, thereby causing the local formation of a conductive filament rich in oxygen vacancies. Such conductive filament causes a variation in the conductivity of the junction, resulting in the resistive switching phenomenon.

The Applicant observes that such variation in the conductivity of the junction between two nanowires 10a, 10b is a temporary variation; the conductive filament 15 will dissolve autonomously after a certain time interval. In other words, the conductive filament 15 is not stable over time and dissolves spontaneously; such a behaviour is referred to as "volatile".

Dissolution of the conductive filament 15 occurs after a certain characteristic time which depends on the size and morphology of the conductive filament 15 and which is related to energy minimization processes. The Applicant also observes that the variation in the conductivity of the junction between two nanowires is dependent on the applied voltage and current.

The Applicant observes that the average time required for the dissolution of a generic conductive filament 15 may vary from 1 microsecond to hundreds of seconds, and can be modulated as a function of the electric field applied across two nanowires of the network of nanowires 10.

In the following, the temporary creation of a conductive filament 15 between at least two nanowires 10a, 10b will also be referred to as "resistive switching".

As shown in Figure 3, the reservoir 100 comprises a plurality of electrodes 30.

Each electrode 30 is in electric contact with a number I of nanowires 10. In particular, after the plurality of nanowires 10 have been spread over the substrate 20, each electrode 30 is formed by depositing a metal in contact with a number K of nanowires 10.

The Applicant observes that the network of nanowires 40 (i.e. the plurality of nanowires 10 spread over the surface of the substrate 20) has a memory resistive behaviour, also known as "memristive" behaviour. In particular, the network of nanowires 40 shows a mechanism of resistive switching of the junctions between nanowires 10 when a potential difference is applied across at least two electrodes 30.

Even more particularly, when a potential difference is applied across two or more electrodes 30 connected to the network of nanowires 40, such potential is redistributed among the nanowires 10 connected to such electrodes 30. As a consequence, the nanowires 10 may show resistive switching events in the junctions that connect the network of nanowires 40 to such electrodes 30. This will result in local variations in the conductivity of the network of nanowires 40, which will depend on the following parameters:
- where the network is stimulated, i.e. the position of the stimulated electrode 30; and
- the time instant of stimulation, because of the volatility of the resistive switching mechanism.

The reservoir 100 as described herein permits processing space-time input signals. In particular, the network of nanowires 40 exhibits an emergent behaviour without direct control over the individual nanowires 10, which has the following characteristics:
- large number of random connections, i.e. the number of junctions between nanowires 10 obtained by randomly spreading the nanowires 10, which ensure that the physical "reservoir" is big enough;
- non-linear dynamics, ensured by the above-described non-linear resistive switching mechanism that occurs in the individual junctions and by their mutual interactions;
- fading memory property, ensured by the volatility of each conductive filament 15 formed in the junctions, which allows the network of nanowires 40 to substantially return to the initial state in the absence of any external electric stimulation;
- echo-state property: due to the volatility of each conductive filament 15, the effect of the input upon the internal dynamics of the reservoir 100 fades away after a certain time interval (note that such time interval depends on the characteristic time of relaxation of the network of nanowires 10). For this reason, the state of the "reservoir" 100 is only dependent on the input electric signal applied recently. The influence of the initial conditions vanishes progressively over time.

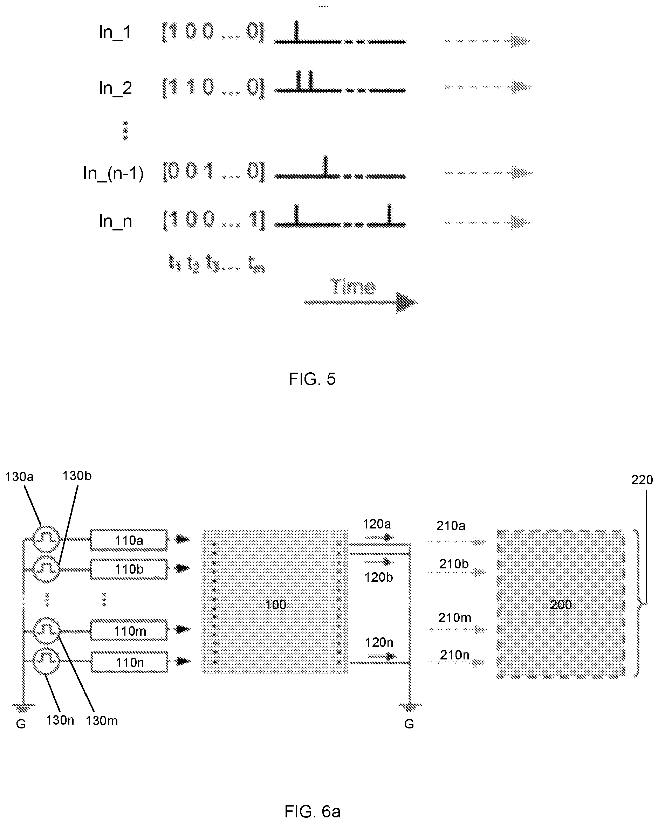

With reference to Figures 5 and 6a, a first illustrative aspect of the disclosure which is not covered by the appended claims, of a reservoir computing system 1 comprising a reservoir 100 and a readout 200 will now be described.

According to such illustrative aspect of the disclosure which is not covered by the appended claims, the reservoir 100 comprises n input electrodes 110a, ..., 110n and n output electrodes 120a, ... 120n. In other words, the reservoir 100 comprises 2n electrodes 30; in particular, each one of the n input channels is associated with one input electrode 110a, ... , 110n and one output electrode 120a, ... 120n.
E ach input electrode 110a, ... , 110n is connected in series to a respective voltage generator 130a, ... , 130n.

Preferably, each voltage generator 130a, ... , 130n is an impulse generator.

The output of the reservoir 100 is associated with the current flowing across each output electrode 120a, ... 120n and the ground G.

Alternatively, the output of the reservoir 100 is associated with the conductivity between each input electrode 110a, ... , 110n and the respective output electrode 120a, ... 120n.

The output of the reservoir 100 is sent to the readout 200. For example, each output electrode 120a, ... 120n connected to ground G is also connected to an input 210a, ... 210n of the readout 200.

In other words, the readout 200 is provided with n inputs 210a, ... 210n, and each input 210a, ... 210n is associated with a respective output electrode 120a, ... , 120n of the reservoir 100. The readout 200 generates an output signal 220 as a function of the output of the reservoir 100.

The structure of a readout 200 is known and will not be described in detail herein.

For example, the readout 200 may be any neural network implemented as:
i) software (conventional method)
ii) hardware, e.g. by means of a system of memristive "crossbars", as described in *"*Memristive crossbar arrays for brain-inspired computing", Nature materials 18.4 (2019): 309-323*.*

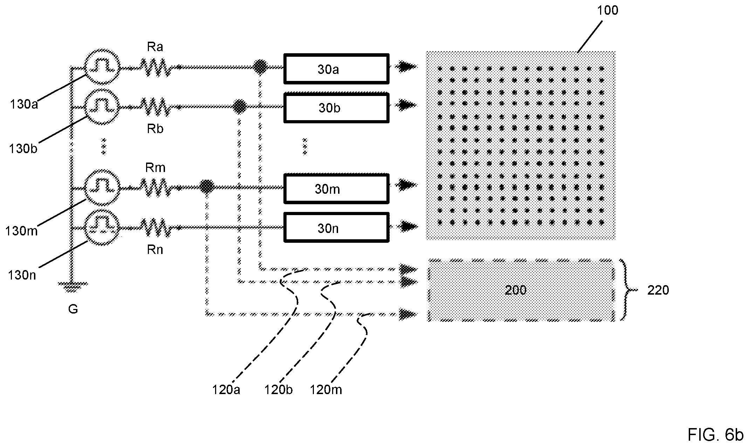

With reference to Figures 5 and 6b, according to a further embodiment the reservoir 100 comprises n electrodes 30a, ..., 30n made as described above.

A respective voltage generator 130a, ..., 130n is electrically connected in series to each electrode 30a, ..., 30n. Preferably, each voltage generator 130a, ..., 130n is an electric impulse generator in_1, ..., in_n (Figure 5). Preferably, each voltage generator 130a, ..., 130n sends a number M of impulses generated at different time instants t₁, t₂, t₃, ..., tₘ.

In other words, a generic space-time input received by the reservoir 100 consists of n voltage impulse trains associated with a respective electrode 30a, ... 30n, each impulse train consisting of a plurality of time instants.

Each electrode 30a, ..., 30n is connected in series to a respective voltage generator 130a, ... , 130n by means of a respective resistor Ra, ... , Rn.

Preferably, the resistors Ra, ... , Rn are all equal.

Preferably, the resistors Ra, ... , Rn have a fixed resistivity that cannot vary over time.

An output signal emitted by the reservoir 100 is acquired by a plurality of terminals 120a, ..., 120m.

Each terminal 120a, ..., 120m is connected to a respective resistor Ra, ... , Rm and a respective electrode 30a, ..., 30m of the reservoir 100.

In other words, the output of the reservoir 100 consists of the voltage measured at the terminal 120a,... 120m of each channel after the network of nanowires 40 has been stimulated by means of a plurality of impulse trains (input signals in_1, ..., in_n); each impulse train being generated by a respective voltage generator 130a, ..., 130n.

Preferably, the voltages that are present at each terminal 120a, ..., 120m are read after the stimulation of the network of nanowires 40; for example, such voltages are read by applying a reading direct current to one (or more) of the electrodes 30a, ..., 30n of the reservoir 100.

The Applicant observes that, considering a number n of input signals (i.e. n electrodes 30 connected to a respective voltage generator 130), the independent outputs out_1, ..., out_n of the reservoir 100 are, in accordance with Kirchhoff's laws, n-1. Preferably, such outputs out_1, ..., out_n are then sent to, and analyzed by, the readout 200.

In other words, the reservoir 100 has n electrodes 30a, ..., 30n; n-1 electrodes are associated with a respective terminal 120a,... 120m; each terminal 120a,... 120m is electrically connected to the readout 200.

The Applicant observes that the electric stimulation by means of impulse trains inputted to the reservoir 100 causes a local reconfiguration of the electric conductivity of the network of nanowires 40. Such local reconfiguration of the electric conductivity is also dependent on the specific space-time stimulation sequence.

It should also be noted that, thanks to the non-linear dynamics of the network of nanowires 40 (characterized by short-term memory and echo properties, as previously described), the network of nanowires 40 has the input separability property. This means that the output of the reservoir 100 can provide the main characteristics of the space-time pattern received as input. In other words, the output of the reservoir 100 is strictly dependent on the space-time characteristics of the signal inputted to the reservoir 100.

The reservoir 100 permits mapping an input n x m (i.e. n impulse trains with m time intervals) into an output of size n-1 that can be analyzed and classified/recognized by means of the readout 200.

Due to the smaller input size, a considerable reduction is obtained in the number of parameters to be trained (i.e. from n x m to n-1), thus saving time and energy when training the readout 200.

Furthermore, the reservoir 100 can use each electrode 30 both as an input and as an output, thereby halving of the number of electrodes and connections (n electrodes are associated with an n x m system).

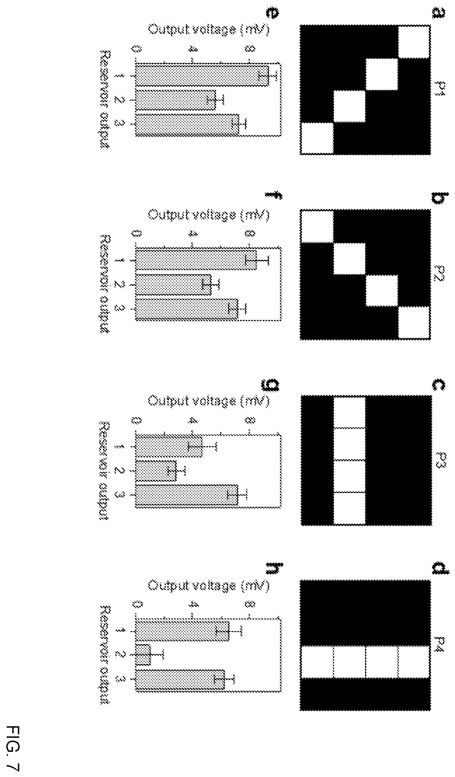

In the examples of Figures 7a, 7b, 7c, 7d, considering a reservoir 100 comprising four (N=4) electrodes 30, a respective logic input has been sent to each electrode 30 which comprises four time intervals t₁, t₂, t₃, t₄.

In particular, each logic input P1, P2, P3, P4 has been sent to the reservoir 100 thirty times, and a readout 200 has been used for generating a respective histogram of the output voltage readings, such output voltages having been read from three (N-1) electrodes 30.

As shown in Figures 7e, 7f, 7g and 7h, the readout 200 can discern among the different patterns inputted to the reservoir 100 through the four electrodes 30, acquiring three output signals from three (N-1) of said four electrodes 30.

The present invention offers some important advantages.

In particular, the reservoir computing system is, advantageously, a system that can be produced at a low cost. In particular, it does not require the use of lithographic techniques and/or white chambers.

Advantageously, the reservoir computing system described herein exploits the nanowires' memristive behaviour for neuromorphic computation, in particular without direct control over the individual elements that constitute the network of nanowires.

Advantageously, the reservoir computing system described herein uses the same electrodes both as inputs and as outputs in the network of nanowires, thus minimizing the number of connections and increasing the performance in terms of differentiation of the internal states of the system.

Advantageously, the reservoir computing system described herein can be implemented by means of transparent and expandable electronic components.

Advantageously, the network of nanowires is transparent and, if the nanowires are suitably deposited on a transparent substrate, can be used for producing transparent memristive computing devices.

## Claims

1. A reservoir computing system (1) for a neural network, comprising:
a) a device (100) comprising:
- a network of nanowires (40) disposed on a substrate (20); wherein said network of nanowires (40) comprises a plurality of nanowires spread over a surface of said substrate (20);
- a plurality of electrodes (30), each electrode (30) being electrically connected to at least one respective nanowire (10) of the plurality of nanowires;
wherein, when a potential difference is applied across two electrodes of the plurality of electrodes (30), said network of nanowires (40) is configured to exhibit a temporary variation of conductivity;
b) a readout (200);
wherein the plurality of electrodes (30) of said device (100) comprises n electrodes (30a, ..., 30n);
wherein each electrode of the n electrodes (30a, ..., 30n) is configured to receive a respective input
signal from a respective voltage generator (130a, ..., 130n) by means of a respective resistor (Ra, ..., Rn);
wherein a number n-1 of **then** electrodes (30a, ..., 30m) is further associated with a respective output terminal (120a, ..., 120m) electrically connected to said readout (200);
wherein each output terminal (120a, ..., 120m) is configured to emit, , as a function of said input signals, an output signal acquired by said readout (200).

2. The system (1) according to claim 1, wherein each nanowire (10) of the network of nanowires (40) comprises a metal core (11) and an insulating coating (12).

3. The system (1) according to claim 2, wherein said metal core (11) is made of an electro-chemically active material, and said insulating coating (12) is preferably made of a polymeric material or a metal oxide.

4. The system (1) according to claim 2, wherein said metal core (11) is made of an electro-chemically inert material, and said insulating coating (12) is preferably made of a material configured to allow a phenomenon of "resistive switching" by oxygen vacancy migration.

5. The system (1) according to any one of the preceding claims, wherein said substrate (20) is an insulating substrate.

## Patentansprüche

1. Reservoir-Computing-System (1) für ein neuronales Netz, umfassend:
a) eine Vorrichtung (100), umfassend:
- ein Netzwerk von Nanodrähten (40), das auf einem Substrat (20) angeordnet ist; wobei das Netzwerk von Nanodrähten (40) eine Mehrzahl von Nanodrähten umfasst, die über eine Oberfläche des Substrats (20) verteilt sind;
- eine Mehrzahl von Elektroden (30), wobei jede Elektrode (30) elektrisch mit mindestens einem jeweiligen Nanodraht (10) der Mehrzahl von Nanodrähten verbunden ist;
wobei, wenn eine Potentialdifferenz an zwei Elektroden der Mehrzahl von Elektroden (30) angelegt wird, das Netzwerk von Nanodrähten (40) eine vorübergehende Änderung der Leitfähigkeit zeigt;
b) eine Ausleseeinheit (200);
wobei die Mehrzahl von Elektroden (30) der Vorrichtung (100) n Elektroden (30a, ..., 30n) umfasst;
wobei jede Elektrode der n Elektroden (30a, ..., 30n) ausgebildet ist, ein jeweiliges Eingangssignal von einem jeweiligen Spannungsgenerator (130a, ..., 130n) mittels eines jeweiligen Widerstands (Ra, ..., Rn) zu empfangen;
wobei eine Anzahl n-1 der n Elektroden (30a, ..., 30m) ferner mit einem jeweiligen Ausgangsanschluss (120a, ..., 120m) verbunden ist, der elektrisch mit der Ausleseeinheit (200) verbunden ist;
wobei jeder Ausgangsanschluss (120a, ..., 120m) ausgebildet ist, in Abhängigkeit von den Eingangssignalen ein Ausgangssignal auszugeben, das von der Ausleseeinheit (200) erfasst wird.

2. System (1) nach Anspruch 1, wobei jeder Nanodraht (10) des Netzwerks von Nanodrähten (40) einen Metallkern (11) und eine isolierende Beschichtung (12) umfasst.

3. System (1) nach Anspruch 2, wobei der Metallkern (11) aus einem elektrochemisch aktiven Material besteht und die isolierende Beschichtung (12) vorzugsweise aus einem polymeren Material oder einem Metalloxid besteht.

4. System (1) nach Anspruch 2, wobei der Metallkern (11) aus einem elektrochemisch inerten Material besteht und die isolierende Beschichtung (12) vorzugsweise aus einem Material besteht, das dazu ausgebildet ist, ein Phänomen des "resistiven Schaltens" durch Migration von Sauerstofffehlstellen zu ermöglichen.

5. System (1) nach einem der vorhergehenden Ansprüche, wobei das Substrat (20) ein isolierendes Substrat ist.

## Revendications

1. - Système de calcul par réservoir (1) pour un réseau neuronal, comprenant :
a) un dispositif (100) comprenant :
- un réseau de nanofils (40) disposé sur un substrat (20), ledit réseau de nanofils (40) comprenant une pluralité de nanofils étalés sur une surface dudit substrat (20) ;
- une pluralité d'électrodes (30), chaque électrode (30) étant connectée électriquement à au moins un nanofil respectif (10) de la pluralité de nanofils, où, lorsqu'une différence de potentiel est appliquée à travers deux électrodes de la pluralité d'électrodes (30), ledit réseau de nanofils (40) est configuré pour présenter une variation temporaire de conductivité ;
b) une couche de sortie (200) ;
dans lequel la pluralité d'électrodes (30) dudit dispositif (100) comprend n électrodes (30a, ..., 30n) ;
dans lequel chaque électrode des n électrodes (30a, ..., 30n) est configurée pour recevoir un signal d'entrée respectif provenant d'un générateur de tension respectif (130a, ..., 130n) au moyen d'une résistance respective (Ra, ..., Rn) ;
dans lequel un nombre n-1 des n électrodes (30a, ..., 30n) est en outre associé à une borne de sortie respective (120a, ..., 120m) connectée électriquement à ladite couche de sortie (200) ;
dans lequel chaque borne de sortie (120a, ..., 120m) est configurée pour émettre, en fonction desdits signaux d'entrée, un signal de sortie acquis par ladite couche de sortie (200).

2. - Système (1) selon la revendication 1, dans lequel chaque nanofil (10) du réseau de nanofils (40) comprend un noyau métallique (11) et un revêtement isolant (12).

3. - Système (1) selon la revendication 2, dans lequel ledit noyau métallique (11) est constitué d'un matériau électrochimiquement actif, et ledit revêtement isolant (12) est, de préférence, constitué d'un matériau polymère ou d'un oxyde métallique.

4. - Système (1) selon la revendication 2, dans lequel ledit noyau métallique (11) est constitué d'un matériau électrochimiquement inerte, et ledit revêtement isolant (12) est, de préférence, constitué d'un matériau configuré pour permettre un phénomène de « commutation résistive » par migration de lacunes d'oxygène.

5. - Système (1) selon l'une quelconque des revendications précédentes, dans lequel ledit substrat (20) est un substrat isolant.
